# EUROPEAN PATENT SPECIFICATION

(11) **EP 2 637 980 B1**
(45) Date of publication and mention of the grant of the patent: **07.01.2015**
(21) Application number: 11808395.5
(22) Date of filing: 11.11.2011
(51) Int. Cl.: C03C 8/08, C03C 8/16

(54) **PROTECTIVE SURFACE COATING COMPOSITION FOR RESIN BONDED REFRACTORY BRICKS AND ITS METHOD OF PRODUCTION**
OBERFLÄCHENSCHUTZSCHICHTZUSAMMENSETZUNG FÜR HARZGEBUNDENE FEUERFESTE ZIEGEL UND VERFAHREN ZU IHRER HERSTELLUNG
COMPOSITION DE REVÊTEMENT DE PROTECTION DE SURFACE POUR BRIQUES RÉFRACTAIRES LIÉES PAR DE LA RÉSINE ET SON PROCÉDÉ DE PRODUCTION

(30) Priority: 12.11.2010 TR 201009495
(43) Date of publication of application: 18.09.2013
(73) Proprietor: Superates Atese Mukavim Malzeme Sanayi A.S., Istanbul (TR)
(72) Inventor: ASLANOGLU, Ziya, Istanbul (TR)
(74) Representative: Iskender, Ibrahim
(86) International application number: PCT/TR2011/000241
(87) International publication number: WO 2012/064299

(56) References cited:
- EP-A1- 2 135 850
- WO-A1-98/35917
- ES-A1- 2 190 356
- DATABASE WPI Week 198035 Thomson Scientific, London, GB; AN 1980-61978C XP002679295, -& SU 709 581 A1 (AS USSR KOLA MINER) 15 January 1980 (1980-01-15)
- DATABASE WPI Week 199929 Thomson Scientific, London, GB; AN 1999-338322 XP002679296, -& CN 1 210 124 A (WANG W) 10 March 1999 (1999-03-10)

## Description

### The Related Art

The invention relates to torpedo cars, basic oxygen furnace (BOF) and Electric Arc Furnace (EAF) used in steel production and carbon based resin bonded refractory bricks used in steel ladles.

The invention particularly relates to the protective surface coating composition and the production method of this composition comprising the composition providing protection of the said refractory brick etc. materials from oxidation via application of coating on their surfaces.

### The Prior Art

Conventionally, refractory materials are the materials; which are used in production and lining of furnace etc. units operating at high temperatures, and which can endure against various chemical and physical abrasive impacts under high temperature without melting down and by maintaining its physical and chemical properties. In technical terms, refractory materials are the materials and products; ingredients of which do not completely comprise metal or alloy, but which can have a metallic composition, and which have 1500 °C refractoriness. According to DIN 51060 standards, refractory materials can be categorized into three groups. These are; fire resistant refractories 1500 °C, refractories with 500 °C minimum resistance temperature, and high refractors with 1800 °C minimum resistance temperature.

In terms of material classification, refractory materials are in the class of non-metallic inorganic materials such as ceramic, glass, cement etc. In the refractory industry, which is a branch of the ceramic technology, refractory materials are produced as an important intermediate input for fundamental industry fields such as iron and steel industry, non-ferrous metals industry, cement industry, and ceramic and chemical industry etc.

Processes applied on furnaces vary according to the furnace type, the production technology, and the production type and each varying process requires usage of a refractor with different type and characteristic. Therefore a great variety of refractories are produced.

One of these refractory products is the resin bonded carbon based refractory bricks. They comprise various refractory raw materials such as dolomite (MgO-CaO-C), magnesite (MgO-C), alumina silicon carbide (Al₂O₃-SiC-C) or spinel (Al₂O₃-MgO-C) according to the main aggregate they comprise. According to the refractory aggregates they comprise, carbon based resin bonded bricks are commonly used in furnaces and ladles wherein steel production is made such as electric arc furnaces, basic oxygen furnaces, torpedoes, and steel ladles.

Resin bonded refractory bricks are prepared by mixing of the carbon and, refractory aggrega with binding agents such as liquid resin, tar, or synthetic resin etc. After shaping of the prepared mixtures in presses, they are tempered in furnaces at 200-250 °C temperatures and thus the desired strength is obtained by turning their resin ingredient into bakelite form. Since these types of bricks have low temperature bond characteristics, their ceramic bond structures are formed during the pre-heating of ladle lining and usage phases.

Due to the casting made at high temperatures, the ladles or furnaces laid up from resin bonded bricks go through a pre-heating process with the purpose of making the furnace or ladles ready for casting and protecting them against thermal shock. Pre-heating process comprises; making the ladle/furnace ready for casting operation by heating it at a certain heating rate and period. During the pre-heating process, both the resin found in the brick is removed and the thermal shock is prevented by heating of the bricks up to the temperatures close to their usage temperatures. In general, natural gas is used with the purpose of pre-heating. Since the pre-heating phases continue for at least 10 hours, the carbon found within the brick burns and the CO₂ gas makes the brick surface porous together with the carbon oxidation formed and accelerates the brick erosion during the first liquid steel charge by weakening the bond strength of the carbon with the refractory main component (MgO, SiC, and Al₂O₃). And this causes reduction of ultimate brick performance.

Several studies have been carried out for prevention of carbon oxidation in carbon based composite materials. Coating of carbon fibre surfaces with glass and ceramic based protective films with various methods can be regarded in the first group of these studies; however, application of this method is limited to special applications since it is an expensive method. The protective coatings found in the second group are especially coating applications (phosphate, beewax, dye etc.) for the purpose of protecting resin bonded nozzles and dolomite based bricks against humidity etc. external factors during transportation, but these kinds of coatings can not provide protection at high temperatures (> 200 °C). The third group of studies conducted with the purpose of protecting graphite ladle and electrode surfaces are the coating applications made for sealing off graphite ladle or electrode pores and providing thermal barrier with TiB₂, ZrB₂, and SiC etc. very thin materials. However, any gas outlet is not possible since these types of materials are gone through pre-sintering process. However, when resin bonded bricks have on-site sintering structures, they have gas outlet from the surface, since the resin found in the structure is removed during the pre-heating phase. And this may cause peeling of the coating or formation of capillary cracks. And the capillary cracks are not adequately protective against oxidation.

Some exemplary applications of the above said prior art are encountered in the conducted literature research. One of these is the patent with the publication no US 5725955 and title "Protection of the products made of carbon comprising composite materials against oxidation and the product obtained from this process". The invention relates to application of the solution formed of Phosphate (P₂O₅), silica (SiO₂), and alumina (Al₂O₃) components on the composite material surface as coating. However, the application is made on finished products and water is used as the solvent. Since gas outlet continues up to 500 °C in resin bonded bricks, resin dissolves in water, and drying is required after coating, application of the said study on resin bonded bricks may cause problems.

Another study is the patent with publication no US 6 632 762 B1 and title "Oxidation Resistant Coating for Carbon". In the said patent study, application of ZrB₂-SiC -H₃PO₄ based coating is described with the purpose of preventing oxidation of carbon composites at high temperatures. It is aimed to protect carbon composites at high temperatures with these types of coatings. It is not appropriate for low temperature oxidation of resin bonded bricks.

Surface coatings are also described in WO 98/35917, ES 2190356 A and SU 709581 A.

As a result, surface coatings are needed, which provide protection of the resin bonded carbon comprising refractory material surface at the pre-heating level and drying level from oxidation. Prior embodiments can not properly meet demands.

### Purpose of the Invention

From the known status of the art, purpose of the invention is to provide surface coatings and the production method of the surface coatings, which eliminate the above said drawbacks, and which is applied on the refractory material surface with the purpose of protecting the refractory material surface from oxidation during pre-heating.

Purpose of the invention is to prevent oxidation of the brick surface and thus the carbon comprised by it during the pre-heating operation implemented after laying up of the bricks comprising carbon thanks to the coating composition.

Purpose of the invention is to apply frit comprising thin ceramic protective coating on the brick surface in order to prevent oxidation. By means of the coating, performance of the brick would be improved due to the protection provided by a ceramic film on the brick surface against possible excessive heating, quick heating, and uncontrolled long term heating occasions.

Another purpose of the invention is to obtain easier operating ladle management and high casting performance via prevention of oxidation at the brick surfaces at the pre-heating level via coating of the refractory brick surface with the protective coating.

Another purpose of the invention is to permit gas outlet from brick surface at low temperatures (< 500 °C) and prevent combustion (oxidation) of the carbon found in brick at increasing temperatures (> 800 °C) by forming a dense layer via the frit composition found in the coating composition.

Another purpose of the invention is to provide quick drying, coating homogeneity, and binding of the coating to the carbon comprising brick surface via the coating composition comprising various binding agents together with the frit composition.

Another purpose of the invention is to improve the coating composition, which comprises the frit composition with boron, in accordance with the characteristics expected from a surface coating material.

Another purpose of the invention is to provide the coating composition with frit composition comprising boron with a close thermal expansion coefficient to the resin bonded brick.

In order to achieve the above said purposes, the invention is the protective coating composition providing protection of carbon based refractory brick etc. materials from oxidation via application of coating on their surfaces after production and thus extending their expected service life, and it is characterized in that; it comprises the mixture of frit composition formed of Na₂O, Al₂O₃, SiO₂, ZrO₂, CaO, P₂O₅, and B₂O₃ materials and at least one solvent.

In order to achieve the said purposes, said solvent mixture comprises; acetone, ethyl alcohol, and phosphoric acid.

In order to achieve the said purposes, said frit composition comprises, at most 10 % Na₂O by mass, 20 % to 60 % Al₂O₃ by mass, 30 % to 70 % SiO₂ by mass, 5 % to 20 % ZrO₂ by mass, 2 % to 15 % CaO by mass, 1 % to 20 % P₂O₅ by mass, and at most 10 % B₂O₃ by mass.

In order to achieve the said purposes, said frit composition comprises, 10 % Na₂O by mass, 30 % Al₂O₃ by mass, 37 % SiO₂ by mass, 18 % ZrO₂ by mass, 3 % CaO by mass, 4 % P₂O₅ by mass, and 3 % B₂O₃ by mass.

In order to achieve the said purposes, said solution comprises 20 % to 60 % Frit by mass, 10 % to 40 % ethyl alcohol by mass, 10 % to 40 % acetone by mass, and 10 % to 40 % phosphoric acid by mass.

In order to achieve the said purposes, said solution comprises 40 % Frit by mass, 20 % ethyl alcohol by mass, 20 % acetone by mass, and 20 % phosphoric acid by mass.

In order to achieve the said purposes, the invention is the production method of the protective coating composition providing protection of carbon based refractory brick etc. materials from oxidation via application of coating on their surfaces after production and thus extending their expected service life, and it is characterized in that; it comprises the operation steps of:
- Milling of the frit composition formed of Na₂O, Al₂O₃, SiO₂, ZrO₂, CaO, P₂O₅, and B₂O₃ materials,
- Mixing with acetone, phosphoric acid, and ethyl alcohol solvents at a certain temperature between 25 - 70 °C and heating until obtaining a convenient consistence, and
- Cooling of the solution.

The invention is the method of production for achieving the said purposes, and it is characterized in that; the solid ratio in the composition solution is in the range of 20 %-70%.

The invention is the method of production for achieving the said purposes, and it is characterized in that; adjustment of the solid / liquid ratio of the solution comprises the operation step of; dilution with solvents such as acetone, phosphoric acid and ethyl alcohol.

The invention is the method of production for achieving the said purposes, and it is characterized in that; said frit milling operation is made in the range of 5 - 100 microns of particle size.

The invention is the method of production for achieving the said purposes, and it is characterized in that; it comprises at most 10 % Na₂O by mass, 20 % to 60 % Al₂O₃ by mass, 30 % to 70 % SiO₂ by mass, 5 % to 20 % ZrO₂ by mass, 2 % to 15 % CaO by mass, 1 % to 20 % P₂O₅ by mass, and at most 10 % B₂O₃ by mass.

The invention is the method of production for achieving the said purposes, and it is characterized in that; said solution comprises, 20 % to 60 % Frit by mass, 10 % to 40 % ethyl alcohol by mass, 10 % to 40 % acetone by mass, and 10 % to 40 % phosphoric acid by mass.

The invention is the method of production for achieving the said purposes, and it is characterized in that; it is applied on the resin bonded refractory brick surface via spraying or brush.

### Detailed Description of the Invention

The invention relates to the protective surface coating composition and the production method of this composition comprising the composition providing protection of the said carbon based refractory brick and etc. materials from oxidation via application of coating on their surfaces.

The coating composition of the invention comprises the frit composition developed for coating the refractory brick surface and the solvent substances mixed into the frit composition in order to provide the characteristics expected from a coating material.

Frit is the main component and found in powder form and it is the component providing protection. With the purpose of applying it in the form of surface coating, it is brought into liquid composition form by dissolving in solvents. Also, characteristics of the coating is improved with various chemical solutions in order to provide its binding on the carbon comprising brick surface, quick drying, and coating homogeneity. Phosphoric acid, ethyl alcohol, and acetone are used as solvents. They are required to be used altogether as solvents, since each of them have different roles and tasks.

For instance; phosphoric acid is used for bond strength. Sulphuric acid can also be added in addition to phosphoric acid. Ethyl alcohol and acetone are used for quick drying purposes. However, methyl alcohol can also be used with ethyl alcohol. While acetone performs similar tasks together with the alcohols, it is more convenient to use them altogether.

**Table 1: Ingredients and Their Amounts in Frit Composition**

| **Ingredient** | **Preferred Amount by Mass (%g)** | **Usable Amount by Mass (%g)** |
|---|---|---|
| Na₂O | 10 | 0-12 |
| Al₂O₃ | 25 | 20-60 |
| SiO₂ | 37 | 30-70 |
| ZrO₂ | 18 | 5-20 |
| CaO | 3 | 2-15 |
| P₂O₅ | 4 | 1-20 |
| B₂O₃ | 3 | 0-10 |

**Table 2: Ingredients and Their Amounts in Total Composition**

| **Ingredient** | **Preferred Amount by Mass (%g)** | **Usable Amount by Mass (%g)** |
|---|---|---|
| Frit | 40 | 20 - 60 |
| Ethyl alcohol | 20 | 10 - 40 |
| Acetone | 20 | 10 - 40 |
| Phosphoric acid | 20 | 10 - 40 |

Frit material used in the study is a kind of glass based on boron and its composition and characteristics are improved through various additives in accordance with the characteristics expected from coating. Modified frit material is specially designed for solution and permits gas outlet from brick surface at low temperatures (< 500 °C) and prevents combustion (oxidation) of the carbon found in brick at increasing temperatures (> 800 °C) by forming a dense layer.

Steps of the coating composition production method are as follows:
First of all, the frit composition, ingredients of which are given in table-1, is milled and thus brought into convenient particle size between 5 - 100 microns. Afterwards, it is mixed at a certain temperature (20 - 70 °C) with acetone, phosphoric acid, and ethyl alcohol etc. solvents given in table-2 and heated until obtaining a convenient consistence. The solution cooled after being heated is again mixed with various chemical based binding agents and coating solution is obtained by also adding sulphuric acid together with acetone, phosphoric acid, and ethyl alcohol.

In this way, the solid / liquid ratio of the solution is adjusted by mixing of the composition with the solvents once or twice. Preferred solid ratio is in the 20 - 70 % range. Remaining part is liquid. In an exemplary application, while frit composition is in the form of 40 % solid substance, remaining 60 % substance is the solvent in liquid form. By adjusting the solid / liquid ratio, the protective coating composition is brought into the most convenient form for application on refractory brick surface. The protective coating composition of the invention is applied on the resin bonded refractory brick surface via spraying or brush.

## Claims

1. A protective coating composition providing protection of carbon based refractory brick materials from oxidation via application of coating on their surfaces after production and thus extending their expected lives, and it is **characterized in that**;
- it comprises a frit composition formed of at most 12 % Na₂O by mass, 20 % to 60 % Al₂O₃ by mass, 30 % to 70 % SiO₂ by mass, 5 % to 20 % ZrO₂ by mass, 2 % to 15 % CaO by mass, 1 % to 20 % P₂O₅ by mass, and at most 10 % B₂O₃ by mass and
- solvent mixture comprising acetone, ethyl alcohol and phosphoric acid.

2. Protective coating composition according to Claims 1, and it is **characterized in that**; said frit composition comprises, 10 % Na₂O by mass, 30 % Al₂O₃ by mass, 37 % SiO₂ by mass, 18 % ZrO₂ by mass, 3 % CaO by mass, 4 % P₂O₅ by mass, and 3 % B₂O₃ by mass.

3. Protective coating composition according to Claim 1 and it is **characterized in that**; said solution comprises 20 % to 60 % Frit (Glaze) by mass, 10 % to 40 % ethyl alcohol by mass, 10 % to 40 % acetone by mass, and 10 % to 40 % phosphoric acid by mass.

4. Protective coating composition according to Claims 1, and it is **characterized in that**; said solution comprises, 40 % Frit by mass, 20 % ethyl alcohol by mass, 20 % acetone by mass, and 20 % phosphoric acid by mass.

5. A production method of a protective coating composition providing protection of carbon based refractory brick materials from oxidation via application of coating on their surfaces after production and thus extending their expected lives, and it is **characterized in that** it comprises operation steps of:
- Milling of a frit composition formed of Na₂O, Al₂O₃, SiO₂, ZrO₂, CaO, P₂O₅, and B₂O₃ materials,
- Mixing with acetone, phosphoric acid, and ethyl alcohol solvents at a certain temperature 55 °C and heating until obtaining a convenient consistence, and
- Cooling of solution having solid ratio in a range of 20 % - 70 %.

6. Production method of a protective coating composition according to Claims 5, and it is **characterized in that**; adjustment of the solid / liquid ratio of the solution comprises the operation step of; dilution with solvents acetone, phosphoric acid, and ethyl alcohol.

7. Production method of the protective coating composition according to Claim 5, and it is **characterized in that**; it comprises at most 12 % Na₂O by mass, 20 % to 60 % Al₂O₃ by mass, 30 % to 70 % SiO₂ by mass, 5 % to 20 % ZrO₂ by mass, 2 % to 15 % CaO by mass, 1 % to 20 % P₂O₅ by mass, and at most 10 % B₂O₃ by mass.

8. Production method of the protective coating composition according to Claim 5, and it is **characterized in that**; said solution comprises 20 % to 60 % Frit by mass, 10 % to 40 % ethyl alcohol by mass, 10 % to 40 % acetone by mass, and 10 % to 40 % phosphoric acid by mass.

## Patentansprüche

1. Schutzbeschichtungszusammensetzung, die einen Schutz von auf Kohlenstoff basierenden feuerfesten Steinmaterialien vor Oxidation durch Auftragen einer Beschichtung auf ihre Oberflächen nach der Herstellung bereitstellt und dadurch deren voraussichtliche Nutzungsdauer verlängert und die **dadurch gekennzeichnet ist, dass**;
- sie eine Frittenzusammensetzung umfasst, die gebildet ist aus höchstens 12 Gew.-% Na₂O, 20 Gew.-% bis 60 Gew.-% Al₂O₃, 30 Gew.-% bis 70 Gew.-% SiO₂, 5 Gew.-% bis 20 Gew.-% ZrO₂, 2 Gew.-% bis 15 Gew.-% CaO, 1 Gew.-% bis 20 Gew.-% P₂O₅ und höchstens 10 Gew.-% B₂O₃, und
- einem Lösemittelgemisch, das Aceton, Ethylalkohol und Phosphorsäure umfasst.

2. Schutzbeschichtungszusammensetzung nach Anspruch 1 und die **dadurch gekennzeichnet ist, dass** die Frittenzusammensetzung 10 Gew.-% Na₂O, 30 Gew.-% Al₂O₃, 37 Gew.-% SiO₂, 18 Gew.-% ZrO₂, 3 Gew.-% CaO, 4 Gew.-% P₂O₅ und 3 Gew.-% B₂O₃ umfasst.

3. Schutzbeschichtungszusammensetzung nach Anspruch 1 und die **dadurch gekennzeichnet ist, dass** die Lösung 20 Gew.-% bis 60 Gew.-% Fritte (Glasur), 10 Gew.-% bis 40 Gew.-% Ethylalkohol, 10 Gew.-% bis 40 Gew.-% Aceton und 10 Gew.-% bis 40 Gew.-% Phosphorsäure umfasst.

4. Schutzbeschichtungszusammensetzung nach Anspruch 1 und die **dadurch gekennzeichnet ist, dass** die Lösung 40 Gew.-% Fritte, 20 Gew.-% Ethylalkohol, 20 Gew.-% Aceton und 20 Gew.-% Phosphorsäure umfasst.

5. Herstellungsverfahren für eine Schutzbeschichtungszusammensetzung, die einen Schutz von auf Kohlenstoff basierenden feuerfesten Steinmaterialien vor Oxidation durch Auftragen einer Beschichtung auf ihre Oberflächen nach der Herstellung bereitstellt und dadurch deren voraussichtliche Nutzungsdauer verlängert und das **dadurch gekennzeichnet ist, dass** es die Verfahrensschritte umfasst von:
- Mahlen einer Frittenzusammensetzung, die aus Na₂O-, Al₂O₃-, SiO₂-, ZrO₂-, CaO-, P₂O₅- und B₂O₃-Materialien gebildet ist,
- Mischen mit Aceton-, Phosphorsäure- und Ethylalkohol-Lösemitteln bei einer bestimmten Temperatur von 55 °C und Erhitzen, bis eine zweckmäßige Konsistenz erhalten wird, und
- Abkühlen der Lösung, die ein Feststoffverhältnis in einem Bereich von 20 % bis 70 % aufweist.

6. Herstellungsverfahren für eine Schutzbeschichtungszusammensetzung nach Anspruch 5 und das **dadurch gekennzeichnet ist, dass** die Einstellung des Feststoff/Flüssigkeits-Verhältnisses der Lösung den Verfahrensschritt der Verdünnung mit den Lösemitteln Aceton, Phosphorsäure und Ethylalkohol umfasst.

7. Herstellungsverfahren für die Schutzbeschichtungszusammensetzung nach Anspruch 5 und die **dadurch gekennzeichnet ist, dass** sie höchstens 12 Gew.-% Na₂O, 20 Gew.-% bis 60 Gew.-% Al₂O₃, 30 Gew.-% bis 70 Gew.-% SiO₂, 5 Gew.-% bis 20 Gew.-% ZrO₂, 2 Gew.-% bis 15 Gew.-% CaO, 1 Gew.-% bis 20 Gew.-% P₂O₅ und höchstens 10 Gew.-% B₂O₃ umfasst.

8. Herstellungsverfahren für die Schutzbeschichtungszusammensetzung nach Anspruch 5 und die **dadurch gekennzeichnet ist, dass** die Lösung 20 Gew.-% bis 60 Gew.-% Fritte, 10 Gew.-% bis 40 Gew.-% Ethylalkohol, 10 Gew.-% bis 40 Gew.-% Aceton und 10 Gew.-% bis 40 Gew.-% Phosphorsäure umfasst.

## Revendications

1. Composition de revêtement protecteur procurant une protection contre l'oxydation de matériaux en briques réfractaires à base de carbone par l'application d'un revêtement superficiel après production et ainsi prolonger leur durée de vie espérée, **caractérisée en ce que** ;
- elle comprend une composition de fritte constituée au plus de 12 % de Na₂O en masse, de 20 % à 60 % de Al₂O₃ en mase, de 30 % à 70 % de SiO₂ en masse, de 5 % à 20 % de ZrO₂ en masse, de 2 % à 15 % de CaO en masse, de 1 % à 20 % de P₂O₅ en masse et au plus de 10 % de B₂O₃ en masse et
- un mélange de solvants comprenant de l'acétone, de l'alcool éthylique et de l'acide phosphorique.

2. Composition de revêtement protecteur selon la revendication 1, **caractérisée en ce que** ladite composition de fritte comprend 10 % de Na₂O en masse, 30 % de Al₂O₃ en mase, 37 % de SiO₂ en masse, 18 % de ZrO₂ en masse, 3 % de CaO en masse, 4 % de P₂O₅ en masse et 3 % de B₂O₃ en masse.

3. Composition de revêtement protecteur selon la revendication 1, **caractérisée en ce que** ladite composition de fritte comprend de 20 % à 60 % de Fritte (Vernis) en masse, de 10 % à 40 % d'alcool éthylique en masse, de 10 % à 40 % d'acétone en masse et de 10 % à 40 % d'acide phosphorique en masse.

4. Composition de revêtement protecteur selon la revendication 1, **caractérisée en ce que** ladite composition de fritte comprend 40 % de Fritte (Vernis) en masse, 20 % d'alcool éthylique en masse, 20 % d'acétone en masse et 20 % d'acide phosphorique en masse.

5. Procédé de production d'une composition de revêtement protecteur procurant une protection contre l'oxydation de matériaux en briques réfractaires à base de carbone par l'application d'un revêtement superficiel après production et ainsi prolonger leur durée de vie espérée, **caractérisé en ce qu'**il comprend les étapes de fonctionnement consistant à :
- moudre une composition de fritte constituée des matériaux Na₂O, Al₂O₃, SiO₂, ZrO₂, CaO, P₂O₅ et B₂O₃,
- mélanger à l'aide des solvants acétone, acide phosphorique et alcool éthylique à une certaine température de 55 °C et chauffer jusqu'à obtenir une consistance convenable, et
- refroidir la solution possédant un rapport solide compris dans une gamme allant de 20 % à 70 %.

6. Procédé de production d'une composition de revêtement protecteur selon la revendication 5, **caractérisé en ce que** l'ajustement du rapport solide / liquide de la solution comprend l'étape de fonctionnement de dilution à l'aide des solvants acétone, acide phosphorique et alcool éthylique.

7. Procédé de production d'une composition de revêtement protecteur selon la revendication 5, **caractérisé en ce que** la composition comprend au plus 12 % de Na₂O en masse, de 20 % à 60 % de Al₂O₃ en mase, de 30 % à 70 % de SiO₂ en masse, de 5 % à 20 % de ZrO₂ en masse, de 2 % à 15 % de CaO en masse, de 1 % à 20 % de P₂O₅ en masse et au plus 10 % de B₂O₃ en masse.

8. Procédé de production d'une composition de revêtement protecteur selon la revendication 5, **caractérisé en ce que** ladite composition de fritte comprend de 20 % à 60 % de Fritte en masse, de 10 % à 40 % d'alcool éthylique en masse, de 10 % à 40 % d'acétone en masse et de 10 % à 40 % d'acide phosphorique en masse.
